# EUROPEAN PATENT APPLICATION

(11) **EP 3 726 122 A1**
(43) Date of publication of application: **21.10.2020**
(21) Application number: 19756310.9
(22) Date of filing: 04.04.2019
(51) Int. Cl.: F16M 13/04

(54) **STABILIZER FOLDING STRUCTURE AND HANDHELD STABILIZER**

(30) Priority: 06.03.2019 CN 201910169064
(71) Applicant: Guangdong Sirui Optical Co., Ltd, Zhongshan, Guangdong 528458 (CN)
(72) Inventor: LI, Jie, Wuguishan Town Zhongshan, Guangdong 528458 (CN); LUO, Weibo, Wuguishan Town Zhongshan, Guangdong 528458 (CN)
(74) Representative: Lavoix
(86) International application number: PCT/CN2019/081415
(87) International publication number: WO 2020/177177

(57) **Abstract**

The present invention relates to a stabilizer of a ball head, and particularly provides a stabilizer folding structure and a handheld stabilizer. The stabilizer folding structure, being used for rotatably connecting a motor base and a rocker arm, enabling the motor base and the rocker arm to have an expanded first state and a contracted second state during a relative rotation process, includes: an elastic member, applying an elastic force to allow the motor base to tightly abut against the rocker arm; and a snap joint structure, arranged at a position where the motor base abuts against the rocker arm, the snap joint structure is fastened to limit relative rotation of the motor base and the rocker arm in the first state and second state, and the snap joint structure is unfastened to enable the motor base and the rocker arm to conduct relative rotation in other states. The folding structure in the present invention facilitates folding and accommodation of a stabilizer, and is convenient to be used by users.

## Description

### TECHNICAL FIELD

The present invention relates to a ball head stabilizer, particularly to a stabilizer folding structure and a handheld stabilizer.

### BACKGROUND

With the popularization of online live broadcasting and short videos, handheld stabilizers have found increasingly wide applications. An ordinary handheld stabilizer includes a handle and a ball head capable of uniaxial or multi-axial rotation. It usually requires a large space to accommodate a handheld stabilizer for its protection, and the stabilizer structure with a low integration is prone to damages caused by collision, thereby calling for a handheld stabilizer convenient to be folded and accommodated.

### SUMMARY

In an attempt to solve the technical problem of inconvenient accommodation of stabilizers in the prior art, the present invention provides a stabilizer folding structure for folding and accommodating a stabilizer.

Meanwhile, to solve the technical problem of inconvenient accommodation of stabilizers in the prior art, the present invention provides a handheld stabilizer convenient to be folded and accommodated.

In a first aspect, the present invention provides a stabilizer folding structure, used for rotatably connecting a motor base and a rocker arm, enabling the motor base and the rocker arm to have an expanded first state and a contracted second state during a relative rotation process, including:
an elastic member, applying an elastic force to allow the motor base (1) to tightly abut against the rocker arm; and
a snap joint structure, arranged at a position where the motor base abuts against the rocker arm, the snap joint structure is fastened to limit relative rotation of the motor base and the rocker arm in the first state and second state, and the snap joint structure is unfastened to enable the motor base and the rocker arm to conduct relative rotation in other states.

The motor base abuts against the rocker arm, the snap joint structure is arranged on the abutted surface, and comprises a snap joint arranged on the motor base or the rocker arm and at least two fit joints correspondingly arranged on the rocker arm or the motor base, the snap joint is fastened with one of the at least two fit joints in the first state, and fastened with one of other fit joints in the second state.

The stabilizer folding structure further includes:
a rotation shaft, two ends of which are respectively connected with the motor base and the rocker arm, enabling at least one of the motor base and the rocker arm to rotate around the rotation shaft;

The stabilizer folding structure further includes:
a stop sleeve, a first mounting groove is arranged at a joint of the motor base and the rocker arm, for one end of the rotation shaft to be fixedly mounted and the stop sleeve to be fixedly arranged therein; and
a positioning sleeve, a second mounting groove is arranged at the joint of the motor base with the rocker arm, for the other end of the rotation shaft to be rotatably connected and the positioning sleeve to be fixedly arranged therein, when the motor base is rotatably connected with the rocker arm, one end face of the positioning sleeve abuts against one end face of the stop sleeve, and the snap joint and the fit joints are arranged on the end face where the positioning sleeve abuts against the stop sleeve.

The snap joint is at least one wedge-shaped boss arranged on an end face of the positioning sleeve, the fit joints are at least two recesses arranged on an end face of the stop sleeve corresponding to the wedge-shaped boss which is fastened in the recess in the first state and second state and abuts against an end face of the stop sleeve in other states.

The snap joint comprises two wedge-shaped bosses arranged on an end face of the positioning sleeve in 180°-symmetry, the fit joints comprises two recesses correspondingly arranged on an end face of the stop sleeve.

The stabilizer folding structure further includes:
a limit structure, arranged at a joint position of the rocker arm and the motor base, for providing a rotation path for relative rotation of the rocker arm and the motor base.

The limit structure comprises a limit projection arranged on one end face of the positioning sleeve and a limit chute arranged on one end face of the stop sleeve, during the relative rotation process of the rocker arm and the motor base, the limit projection slides in the limit chute.

The limit chute has an arc shape with an included angle of 180°, the folding structure is in the first state when the limit projection slides to an extreme position on one side within limit chute, and the folding structure is in the second state when the limit projection slides to an extreme position on the other side within limit chute.

The elastic member is arranged in the second mounting groove, one end of which abuts against the other end face of the positioning sleeve, and the other end of which is provided with a compression structure for rendering the elastic member in a compression state.

The compression structure is a compression nut in threaded connection with an end of the rotation shaft, the elastic member is a disc spring sleeved between the compression nut and the positioning sleeve.

The stabilizer folding structure further includes:
a locking structure, arranged at a joint position of the rocker arm and the motor base in a unlocked manner, when the locking structure is in an unlocked state, the rocker arm and the motor base can conduct relative rotation, and when the locking structure is in a locked state, the rocker arm and the motor base are fixedly connected.

In a second aspect, the present invention provides a handheld stabilizer, including the above-mentioned stabilizer folding structure.

The handheld stabilizer further includes:
a handle assembly; and
a ball head assembly, comprising a heading arm, roll arm and pitch arm which are sequentially rotatably connected, one end of the pitch arm is provided with a clamping part, one end of the heading arm is rotatably connected with the handle assembly via the motor base, and the stabilizer folding structure is used for connecting the motor base and the heading arm.

An elastic lock is respectively provided at a joint position of the heading arm and the roll arm, and a joint position of the roll arm and the pitch arm.

The technical solutions of the present invention have the following beneficial effects:
1) The present invention provides a stabilizer folding structure, used for rotatably connecting a motor base and a rocker arm, enabling the motor base and the rocker arm to have an expanded first state and a contracted second state during a relative rotation process, so that the stabilizer can be folded, facilitating its accommodation by a user. The folding structure includes an elastic member and a snap joint structure, the elastic member applies an elastic force to allow the motor base to tightly abut against the rocker arm, enabling the connection between the motor base and the rocker arm to be more stable, facilitating use by the user. The snap joint structure is arranged at a position where the motor base abuts against the rocker arm, the snap joint structure is fastened to limit relative rotation of the motor base and the rocker arm in the first state and second state, and the snap joint structure is unfastened to enable the motor base and the rocker arm to conduct relative rotation in other states. The snap joint structure enables the stabilizer to be more stable during use and accommodation, preventing wobbling.
2) The present invention provides a stabilizer folding structure, wherein the motor base abuts against the rocker arm, the snap joint structure is arranged on the abutted surface, and includes a snap joint arranged on the motor base or the rocker arm and at least two fit joints correspondingly arranged on the rocker arm or the motor base, the snap joint is fastened with one of the at least two fit joints in the first state, and fastened with one of other fit joints in the second state. It can realize expansion and contraction of the stabilizer through switching of fastening of the snap joint with different fit joints, facilitating swift switching by the user.
3) The stabilizer folding structure provided by the present invention further includes a rotation shaft, a stop sleeve and a positioning sleeve, a first mounting groove is arranged at a joint of the motor base and the rocker arm, for one end of the rotation shaft to be fixedly mounted and the stop sleeve to be fixedly arranged therein, a second mounting groove is arranged at the joint of the motor base with the rocker arm, for the other end of the rotation shaft to be rotatably connected and the positioning sleeve to be fixedly arranged therein, when the motor base is rotatably connected with the rocker arm, one end face of the positioning sleeve abuts against one end face of the stop sleeve, and the snap joint and the fit joints are arranged on the end face where the positioning sleeve abuts against the stop sleeve. The connection between the rotation shaft, the stop sleeve and the positioning sleeve facilitates the processing and assembling of the folding structure.
4) In the stabilizer folding structure provided by the present invention, the snap joint comprises two wedge-shaped bosses arranged on an end face of the positioning sleeve in 180°-symmetry, the fit joints include two recesses correspondingly arranged on an end face of the stop sleeve. The wedge-shaped boss and recesses facilitate fastening and unfastening of the snap joint structure, have a better assembling effect, while minimizing the efforts to switch the stabilizer among different states.
5) The stabilizer folding structure provided by the present invention further includes a limit structure, which is arranged at a joint position of the rocker arm and the motor base, for providing a fixed rotation path for relative rotation of the rocker arm and the motor base, preventing distortion of internal electrical connection lines caused by the relative rotation between the rocker arm and the motor base.
6) The stabilizer folding structure provided by the present invention further includes a locking structure arranged at a joint position of the rocker arm and the motor base in a unlocked manner, when the locking structure is in an unlocked state, the rocker arm and the motor base can conduct relative rotation, and when the locking structure is in a locked state, the rocker arm and the motor base are fixedly connected, further enhancing the stability of the stabilizer during use and accommodation, facilitate uses by the user.
7) The handheld stabilizer provided by the present invention includes the above stabilizer folding structure, facilitating use and accommodation of the stabilizer by a user.

### BRIEF DESCRIPTION OF THE DRAWINGS

In order to make a clearer description of technical solutions in specific implementations of the present invention or prior art, drawings involved in description for the specific implementations or the prior art will be briefly introduced, and apparently, the drawings described below illustrate some implementations of the present invention, for one with ordinary skill in the art, other drawings can also be obtained in accordance with these drawings without delivering creative efforts.
FIG. 1 is a structural diagram for a handheld stabilizer in a first state in an embodiment in accordance with the present invention;
FIG. 2 is an exploded diagram for a folding structure in an embodiment in accordance with the present invention;
FIG. 3 is a structural diagram for a positioning sleeve in an embodiment in accordance with the present invention;
FIG. 4 is a structural diagram for a rotation shaft in an implementation in accordance with the present invention;
FIG. 5 is a structural diagram for a stop sleeve in an implementation in accordance with the present invention;
FIG. 6 is a section structural diagram for a folding structure in an implementation in accordance with the present invention;
FIG. 7 is a structural diagram for a handheld stabilizer in a second state in an implementation in accordance with the present invention.

### Description for reference signs:

1-motor base; 11-first mounting groove; 2-elastic member; 3-rotation shaft; 31-T type lug; 4-stop sleeve; 41-recess; 42-limit chute; 5-positioning sleeve; 51-wedge-shaped boss; 52-limit projection; 6-elastic lock; 7-compression nut; 81-bolt lock; 82-lock hole; 9-ball head assembly; 91-heading arm; 911-second mounting groove; 92-roll arm; 93-pitch arm; 931-clamping part; 10-handle assembly.

### DETAILED DESCRIPTION

Technical solutions of the present invention will be described clearly and completely as follows in conjunction with the drawings, apparently, the described embodiments are just part rather than all embodiments of the present invention. Based on the embodiments in the present invention, all other embodiments obtained by one with ordinary skill in the art without delivering creative efforts shall fall into the protection scope of the present invention. Moreover, technical features involved in different implementations described in the present invention below may be combined with each other as long as no conflicts occur therebetween.

The folding structure provided by the present invention can be used in a uniaxial or multi-axial handheld stabilizer, so as to rotatably connect the motor base and the rocker arm, delivering an expanded first state and a fold-contracted second state between the rocker arm and the rocker arm and between a handle and the rocker arm. The folding structure includes an elastic member and a snap joint structure, the snap joint structure is arranged at a position where the motor base abuts against the rocker arm, the snap joint structure is fastened to limit relative rotation of the motor base and the rocker arm during relative rotation of the motor base and the rocker arm, making the connection structure more stable during use or accommodation of the stabilizer by a user; and the snap joint structure is unfastened to enable the motor base and the rocker arm to conduct relative rotation, so as to switch states of use of the stabilizer. The elastic member keeps providing an elastic force to allow the motor base to tightly abut against the rocker arm, making the folding structure more stable and reliable.

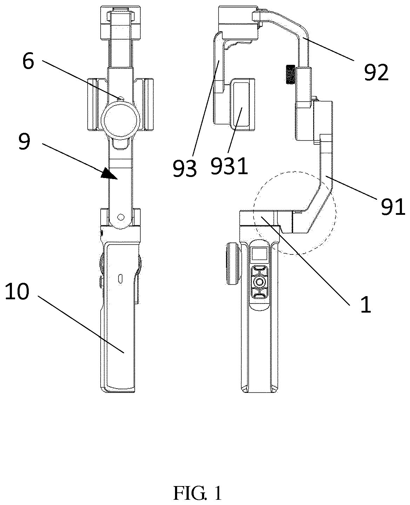

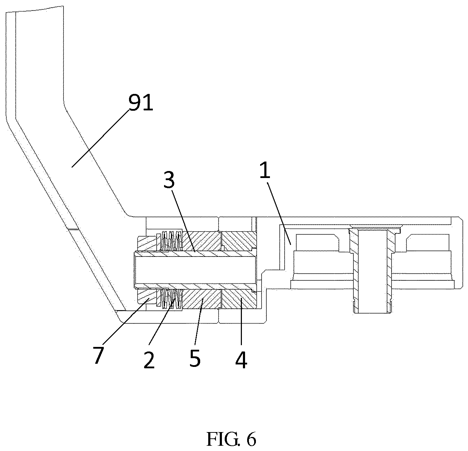

FIG. 1 to FIG. 7 illustrate an implementation in accordance with a handheld stabilizer of the present invention, in this implementation, the stabilizer is a triaxial handheld stabilizer, including a handle assembly 10 and a ball head assembly 9. The ball head assembly 9 includes a heading arm 91, a roll arm 92 and a pitch arm 93 which are sequentially connected through a rotation motor, one end of the pitch arm 93 is a clamping part 931 for clamping a mobile device. One end of the heading arm 91 is rotatably connected to the upper end of the handle assembly 10 through a motor base 1. As shown in FIG. 1, the stabilizer realizes omnidirectional stability of a mobile device through controlled-rotation of three rocker arms, facilitating photographing by users.

In this implementation, the folding structure is arranged between the motor base 1 and the heading arm 91, one end of the heading arm 91 abuts against one end face of the motor base 1. A first mounting groove 11 is provided at the position of an end face of the motor base 1, a second mounting groove 911 is provided at the position of an end face of the heading arm 91, when the heading arm 91 is connected with the motor base 1, the first mounting groove 11 communicates with the second mounting groove 911, and the folding structure is arranged in the first mounting groove 11 and the second mounting groove 911.

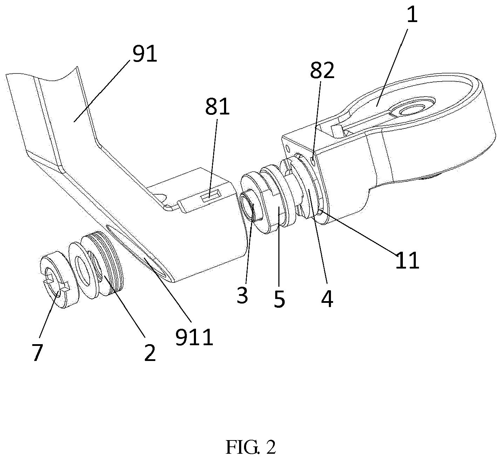

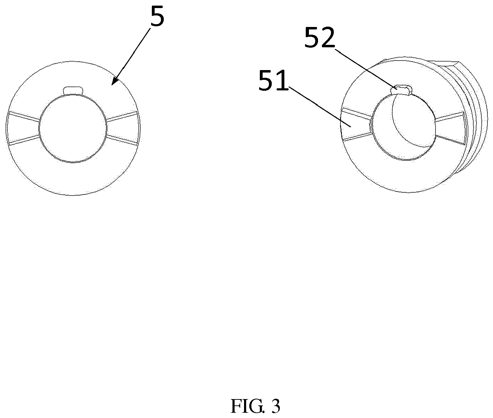

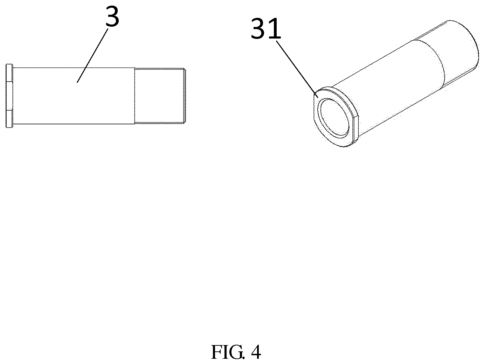

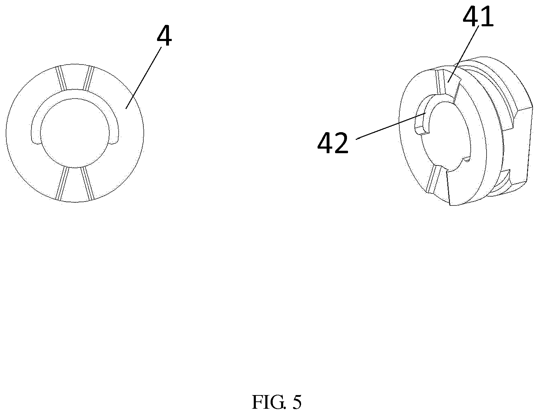

As shown in FIG. 2 to FIG. 6, the folding structure includes a rotation shaft 3, a stop sleeve 4, a positioning sleeve 5, an elastic member 2 and a compression nut 7. As shown in FIG. 3, FIG. 5, the positioning sleeve 5 and the stop sleeve 4 are generally annular with a thrust plane arranged on the side wall thereof, the inner wall of the mounting groove is provided with a corresponding thrust face to limit axial rotation of the positioning sleeve 5 and the stop sleeve 4. Meanwhile the positioning sleeve 5 and the stop sleeve 4 are provided with an limit annular recess on the side wall, and the mounting groove is provided with a corresponding limit structure on the inner wall for axially limiting the positioning sleeve 5 and the stop sleeve 4, allowing the stop sleeve 4 to be fixedly mounted in the first mounting groove 11, the positioning sleeve 5 is fixedly mounted in the second mounting groove 911. As shown in FIG. 4, one end of the rotation shaft 3 is provided with a T type lug 31, one end of the stop sleeve 4 is provided with a T type recess matched with the T type lug 31, enabling the rotation shaft 3 to be fixedly mounted in the stop sleeve 4, i.e., the rotation shaft 3, the stop sleeve 4 and the motor base 1 are fixed assembled.

When the motor base 1 and the heading arm 91 are assembled, the rotation shaft 3 passes through the stop sleeve 4 to be fixedly mounted, the stop sleeve 4 is fixedly mounted in the first mounting groove 11, the positioning sleeve 5 is fixedly mounted in the second mounting groove 911, the other end of the rotation shaft 3 passes through the positioning sleeve 5 in the second mounting groove 911. The elastic member 2 are multiple disc springs which are sleeved on the other end of the rotation shaft 3 and compressed via a compression nut 7 which enables the stop sleeve 4 to tightly abut against an end face of the positioning sleeve 5, thereby realizing the connection of the motor base 1 and the heading arm 91.

As shown in FIG. 3, FIG. 5, one end face of the positioning sleeve 5 is provided with two wedge-shaped bosses 51 which are arranged in 180° symmetry, one end face of the stop sleeve 4 is provided with two recesses 41 having a structure corresponding to that of the wedge-shaped bosses 51. In the first state the wedge-shaped bosses 51 are fastened with the recesses 41, in the second state, the stop sleeve 4 rotates over 180°, and the wedge-shaped bosses 51 are once again fastened with the recesses 41, realizing folding and accommodation of the handle assembly 10.

In this implementation, a limit structure is arranged between the positioning sleeve 5 and the stop sleeve 4, for providing a rotation path for the two, so as to prevent distortion of internal electrical connection lines due to unilateral rotation. The limit structure includes a limit projection 52 arranged on an end face of the positioning sleeve 5 and a limit chute 42 arranged on the stop sleeve 4. When the positioning sleeve 5 is fitted with the stop sleeve 4 via rotation, the limit projection 52 reciprocally slides in the limit chute 42. As shown in FIG. 5, the limit chute 42 is an arc with an included angle of 180°, when the limit projection 52 slides to an extreme position on the left side in the limit chute 42, the wedge-shaped boss 51 is fastened with the recess 41, when the limit projection 52 rotates over 180° and slides to an extreme position on the right side, the wedge-shaped boss 51 rotates over 180° simultaneously to be fastened with the recess 41 once again.

In this implementation, a locking structure is arranged at a joint position of the heading arm 91 and the motor base 1, as shown in FIG. 2, the locking structure includes a bolt lock 81 arranged on the heading arm 91 and multiple lock holes 82 correspondingly arranged on the motor base 1. A user can poke the bolt to limit the rotation of the motor base 1.

When used by a user, the stabilizer is in a first state, with a structure as shown in FIG. 1. During switching of the stabilizer from the first state to the second state, the bolt lock 81 is poked by a user to unlock the locking structure, the handle assembly 10 is rotated to further compress the disc spring, allowing the wedge-shaped bosses 51 to rotate out of the recesses 41, the wedge-shaped bosses 51 abut against and slide along an end face of the stop sleeve 4, when the handle assembly rotates over 180°, the limit projection 52 rotates in the limit chute 42 to an extreme position, meanwhile the wedge-shaped bosses 51 rotate over 180° to be fastened with the recesses 41, and the handle assembly 10 rotates over 180° to be folded and accommodated.

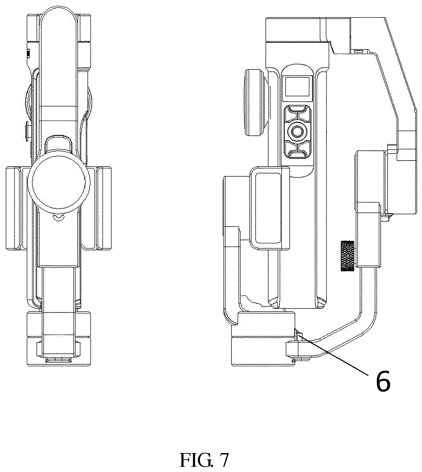

In this implementation, an elastic lock 6 is respectively provided at a joint position of the heading arm 91 and the roll arm 92, and a joint position of the roll arm 92 and the pitch arm 93. The elastic lock 6 stabilizes the connection structure of the rocker arm, while allowing the elastic lock 6 to undergo elastic deformation when the rocker arm is pressed by external forces, so as to protect a contracted rocker arm. As shown in FIG. 7, when the stabilizer is in a second state, the handle assembly 10 rotates over 180° relative to the heading arm 91, the roll arm 92 rotates to a side away from the handle assembly 10, and the pitch arm 93 rotates to position the handle assembly 10 in the clamping part 931, allowing the clamping part 931 to clamp and secure the handle assembly 10 via the elastic lock 6, stabilizing the contracted structure and protecting the stabilizer.

The structure and principle of the stabilizer folding structure and handheld stabilizer of the present invention are illustrated as above, on the basis of the above implementations, the present invention may also have other alternative implementations.

In some alternative implementations, to be noted, the stabilizer folding structure as stated above can be used in a triaxial stabilizer, as well as other structures adapted for a rocker arm to be folded, for instance, a uniaxial stabilizer, a selfie stick, etc. Meanwhile the folding structure can be used between a handle assembly and a heading arm, as well as between a heading arm and a roll arm, and between a roll arm and a pitch arm, to which the present disclosure imposes no limits.

In some other alternative implementations, the folding structure includes an elastic member and a snap joint structure. The snap joint structure includes a snap joint and an arc-shaped chute which are snap-joined to connect the motor base and the rocker arm, the snap joint rotates in the chute to realize rotation and folding of the rocker arm and the motor base. In this implementation, there is no need to arrange a rotation shaft, simplifying the folding structure.

In yet another alternative implementations, there can be multiple fit joints, and folding in more than two directions are realized through fitting of the snap joint with fit joints at different positions, suitable for various accommodation modes.

In yet another alternative implementations, both ends of the rotation shaft may be provided with a limit ring which is rotatably connected with the rotation shaft, and which axially limits the rotation shaft, so that the rotation shaft is capable of conducting rotation relative to both the motor base and the rocker arm, solving the problem of loosening of a compression nut after long-term use.

Obviously, the above embodiments are merely intended to clearly illustrate rather than limit the numerated implementations. For one with ordinary skill in the art, other different forms of modifications or changes may further be made on the basis of the aforementioned descriptions. It is unnecessary and impossible to exhaust all implementations. And modifications or changes derived herefrom obviously fall into the protection scope of the present invention.

## Claims

1. A stabilizer folding structure, **characterized in** being used for rotatably connecting a motor base (1) and a rocker arm, enabling the motor base (1) and the rocker arm to have an expanded first state and a contracted second state during a relative rotation process, comprising:
an elastic member (2), applying an elastic force to allow the motor base (1) to tightly abut against the rocker arm; and
a snap joint structure, arranged at a position where the motor base (1) abuts against the rocker arm, the snap joint structure is fastened to limit relative rotation of the motor base (1) and the rocker arm in the first state and second state, and the snap joint structure is unfastened to enable the motor base (1) and the rocker arm to conduct relative rotation in other states.

2. The stabilizer folding structure in accordance with claim 1, **characterized in that**,
the motor base (1) abuts against the rocker arm, the snap joint structure is arranged on the abutted surface, and comprises a snap joint arranged on the motor base (1) or the rocker arm and at least two fit joints correspondingly arranged on the rocker arm or the motor base (1), the snap joint is fastened with one of the at least two fit joints in the first state, and fastened with one of other fit joints in the second state.

3. The stabilizer folding structure in accordance with claim 2, **characterized in** further comprising:
a rotation shaft (3), two ends of which are respectively connected with the motor base (1) and the rocker arm, enabling at least one of the motor base (1) and the rocker arm to rotate around the rotation shaft (3).

4. The stabilizer folding structure in accordance with claim 3, **characterized in** further comprising:
a stop sleeve (4), a first mounting groove (11) is arranged at a joint of the motor base (1) and the rocker arm, for one end of the rotation shaft (3) to be fixedly mounted and the stop sleeve (4) to be fixedly arranged therein; and
a positioning sleeve (5), a second mounting groove (911) is arranged at the joint of the motor base (1) with the rocker arm, for the other end of the rotation shaft (3) to be rotatably connected and the positioning sleeve (5) to be fixedly arranged therein, when the motor base (1) is rotatably connected with the rocker arm, one end face of the positioning sleeve (5) abuts against one end face of the stop sleeve (4), and the snap joint and the fit joints are arranged on the end face where the positioning sleeve (5) abuts against the stop sleeve (4).

5. The stabilizer folding structure in accordance with claim 4, **characterized in that**,
the snap joint is at least one wedge-shaped boss (51) arranged on an end face of the positioning sleeve (5), the fit joints are at least two recesses (41) arranged on an end face of the stop sleeve (4) corresponding to the wedge-shaped boss (51) which is fastened in the recess (41) in the first state and second state and abuts against an end face of the stop sleeve (4) in other states.

6. The stabilizer folding structure in accordance with claim 5, **characterized in that**,
the snap joint comprises two wedge-shaped bosses (51) arranged on an end face of the positioning sleeve (5) in 180°-symmetry, the fit joints comprises two recesses (41) correspondingly arranged on an end face of the stop sleeve (4).

7. The stabilizer folding structure in accordance with claim 5, **characterized in** further comprising:
a limit structure, arranged at a joint position of the rocker arm and the motor base (1), for providing a rotation path for relative rotation of the rocker arm and the motor base (1).

8. The stabilizer folding structure in accordance with claim 7, **characterized in that**,
the limit structure comprises a limit projection (52) arranged on one end face of the positioning sleeve (5) and a limit chute (42) arranged on one end face of the stop sleeve (4), during the relative rotation process of the rocker arm and the motor base (1), the limit projection (52) slides in the limit chute (42).

9. The stabilizer folding structure in accordance with claim 8, **characterized in that**,
the limit projection (52) slides in the limit chute (42) following a path with an included angle of 180°, the folding structure is in the first state when the limit projection (52) slides to an extreme position on one side within limit chute (42), and the folding structure is in the second state when the limit projection (52) slides to an extreme position on the other side within limit chute (42).

10. The stabilizer folding structure in accordance with claim 4, **characterized in that**,
the elastic member (2) is arranged in the second mounting groove (911), one end of which abuts against the other end face of the positioning sleeve (5), and the other end of which is provided with a compression structure for rendering the elastic member (2) in a compression state.

11. The stabilizer folding structure in accordance with claim 10, **characterized in that**,
the compression structure is a compression nut (7) in threaded connection with an end of the rotation shaft (3), the elastic member (2) is a disc spring sleeved between the compression nut (7) and the positioning sleeve (5).

12. The stabilizer folding structure in accordance with claim 1, **characterized in** further comprising:
a locking structure, arranged at a joint position of the rocker arm and the motor base (1) in a unlocked manner, when the locking structure is in an unlocked state, the rocker arm and the motor base (1) can conduct relative rotation, and when the locking structure is in a locked state, the rocker arm and the motor base (1) are fixedly connected.

13. A handheld stabilizer, **characterized in** comprising the stabilizer folding structure in accordance with any of claims 1-12.

14. The handheld stabilizer in accordance with claim 13, **characterized in** further comprising:
a handle assembly (10); and
a ball head assembly (9), comprising a heading arm (91), roll arm (92) and pitch arm (93) which are sequentially rotatably connected, one end of the pitch arm (93) is provided with a clamping part (931), one end of the heading arm (91) is rotatably connected with the handle assembly (10) via the motor base (1), and the stabilizer folding structure is used for connecting the motor base (1) and the heading arm (91).

15. The handheld stabilizer in accordance with claim 14, **characterized in that**,
an elastic lock (6) is respectively provided at a joint position of the heading arm (91) and the roll arm (92), and a joint position of the roll arm (92) and the pitch arm (93).
